# EUROPÄISCHE PATENTSCHRIFT

(11) **EP 2 049 817 B1**
(45) Veröffentlichungstag und Bekanntmachung des Hinweises auf die Patenterteilung: **09.12.2009**
(21) Anmeldenummer: 07784613.7
(22) Anmeldetag: 09.08.2007
(51) Int. Cl.: F16H 35/00, F16H 19/00, B66D 3/12

(54) **VORGELEGEANTRIEB**
COUNTERSHAFT DRIVE
TRANSMISSION INTERMÉDIAIRE

(30) Priorität: 11.08.2006 AT 13562006
(43) Veröffentlichungstag der Anmeldung: 22.04.2009
(73) Patentinhaber: Buzetzki, Eduard, 7041 Wulkaprodersdorf (AT); Kirchheimer, Karl, 1010 Wien (AT); Schiller, Karl, 7021 Baumgarten (AT)
(72) Erfinder: Buzetzki, Eduard, 7041 Wulkaprodersdorf (AT); Kirchheimer, Karl, 1010 Wien (AT); Schiller, Karl, 7021 Baumgarten (AT)
(74) Vertreter: Holzer, Walter
(86) Internationale Anmeldenummer: PCT/AT2007/000384
(87) Internationale Veröffentlichungsnummer: WO 2008/017093

(56) Entgegenhaltungen:
- EP-A- 1 428 966
- WO-A-92/14028
- DE-C- 557 379
- GB-A- 1 109 092
- GB-A- 190 217 588

## Beschreibung

Die Erfindung betrifft einen Vorgelegeantrieb, insbesondere für Windkraftwerke, der zwischen einer Betätigungsvorrichtung und einer angetriebenen Vorrichtung zwischengeschaltet ist.

Herkömmliche Vorgelege übertragen die Betätigungskraft mit einer vorbestimmten Über- oder Untersetzung auf angetriebene Vorrichtungen, z.B. Stromgeneratoren.

Die Erfindung zielt darauf ab, den Vorgelegeantrieb so auszubilden, daß er mit gutem Wirkungsgrad als Kraftverstärker wirkt, und beruht auf dem Gedanken, das Prinzip des Flaschenzuges auszunützen. Flaschenzüge dienen im allgemeinen zum Verstärken einer z.B. manuell oder elektrisch aufgebrachten Betätigungskraft, die an einem über Rollengruppen (Flaschen) geführten Seil oder einer Kette angreift. Bei Vernachlässigung der Rollenreibung ist die erforderliche Kraft in dem Maße geringer wie der Kraftweg, entlang dem die Kraft wirken muß, d.h. der Weg des Seilendes, gegenüber dem Lastweg, um den sich die Kraft hebt, größer wird. Die Kraftverstärkung ergibt sich bei einem aus einer befestigten oberen und einer unteren losen Flasche (im einfachsten Fall jeweils nur eine Rolle) bestehenden Faktoren-Flaschenzug allgemein aus dem Verhältnis der Laststrangzahl zur Zugstrangzahl. Bei n-Rollen ist die aufzuwendende Kraft gleich dem n-ten Teil der Last.

Die Anmeldung GB1109092 wird als nächster Stand der Technik angesehen und offenbart: Vorgelegeantrieb, insbesondere für Windkraftwerke, der zwischen einer Betätigungsvorrichtung und einer angetriebenen Vorrichtung zwischengeschaltet ist, wobei er mit einem Kettentrieb ausgestattet ist, der nach dem Flaschenzugprinzip arbeitet und die Drehbewegung der Betätigungsvorrichtung über ein von diesem translatorisch bewegtes Schiebeglied aufnimmt, das mit dem einen Ende des Kettentriebes verbunden ist, der über zumindest eine Umlenkrolle zu einem ortsfesten Anker geführt ist, wobei die Umlenkrolle ihrerseits mit der angetriebenen Vorrichtung gekuppelt ist.

Der erfindungsgemäße Vorgelegeantrieb zeichnet sich dadurch aus, daß er mit einem Kettentrieb ausgestattet ist, der nach dem Flaschenzugprinzip arbeitet und die Drehbewegung der Betätigungsvorrichtung über ein Pleuel und ein von diesem translatorisch bewegtes Schiebeglied aufnimmt, das mit dem einen Ende des Kettentriebes verbunden ist, der über zumindest eine Umlenkrolle zu einem ortsfesten Anker und auf seiner der Umlenkrolle abgewandten Seite biegesteif geführt ist, wobei die Umlenkrolle ihrerseits mit einer translatorisch geführten Kulisse verbunden ist, welche mit der angetriebenen Vorrichtung gekuppelt ist.

Vorzugsweise sind die Kettenglieder auf ihrer der Umlenkrolle abgekehrten Seite mit Stützelementen versehen, die aneinander form- und kraftschlüssig angreifen. Alternativ sind die Kettenglieder an ihrer der Umlenkrolle abgekehrten Seite mit Stützelementen versehen, die kraftschlüssig aneinander angreifen, wobei eine ortsfeste Vorspanneinrichtung an der Außenseite der Stützelemente angreift.

Nach einem anderen Merkmal der Erfindung sind die blockförmig ausgebildeten Stützelemente an ihren Stirnseiten nach Art eines Kugeldornes und einer Kugelpfanne ausgebildet.

Die Stützelemente können aber auch in die Kettenglieder integriert sein.

Die Erfindung schafft somit eine Kombination aus flexibel und starr geführten Getriebegliedern, d.h. aus zwei Schiebekulissen, von denen zumindest eine über ein Pleuel mit dem rotierenden Organ in Verbindung steht, und einem durch z.B. kugelgelagerte Druckrollen mit seitlicher Führung geführten Kettentrieb, der über die Kettenräder geführt ist, welche nach dem Flaschenzugprinzip aufgebaut sind. Nach diesem Prinzip ist F_{Antrieb} = F_{Abtrieb} / Radanzahl.

Mit der erfindungsgemäßen Konstruktion kann sowohl eine Hubkraft als auch eine Schubkraft übertragen werden, wobei im Hubbereich die Kette wie ein Seil, im Schubbereich dagegen wie eine Stange wirkt, weil sich die blockartig ausgebildeten Kettenglieder gegenseitig abstützen. In jedem Fall tritt eine Kraftverstärkung ein.

Infolge des einseitigen Aufbaues läuft der Kettentrieb problemlos über die Kettenräder. Der Kettentrieb wird dabei z.B. mittels zumindest einer seitlich geführten Druckrolle in Position gehalten. Wird zur Versteifung der Kettengliederblökke z.B. eine Formschlußverbindung der Blöcke verwendet, so kann auf Druckrollen verzichtet werden. Durch den Formschluß ist ein nahezu verlustfreier Zug- als auch Schubbetrieb möglich.

Die Erfindung und weitere Merkmale derselben werden nachfolgend an Ausführungsbeispielen unter Bezugnahme auf die Zeichnungen näher erläutert. Fig. 1 ist eine Prinzipdarstellung des erfindungsgemäßen Vorgelegetriebes; Fig. 2a ist eine Seitenansicht und Fig. 2b eine Draufsicht eines Kettenrades mit einem Teil des über dieses geführten Kettentriebes; die Fig. 3 bis 6 zeigen Details des Kettentriebaufbaues; die Fig. 7a-7c und 8a, 8b die Kraft- und Drehmomentberechnung eines Vorgeleges mit vier Rädern; und Fig. 9 eine weitere Ausführungsform der Erfindung.

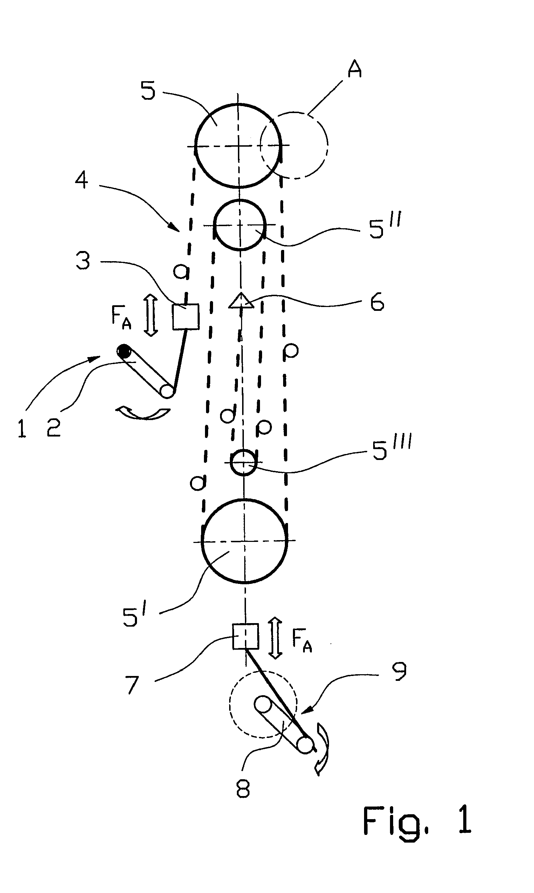

Fig. 1 zeigt eine Dreh-Betätigungsvorrichtung 1, die über ein Pleuel 2 mit einer Schiebekulisse 3 verbunden ist, welche das erste Glied eines Vorgelege-Kettentriebes 4 darstellt. Die Schiebekulisse 3 ist mit einem Ende des Kettentriebes 4 verbunden, der über zumindest ein Umlenk-Kettenrad 5-5"' geführt und mit einem Festlager 6 verbunden ist. Das Kettenrad 5 ist seinerseits mit einer Schiebekulisse 7 verbunden, welche die hin- und hergehende Bewegung des Kettenrades 5 über ein Pleuel 8 an eine Dreh-Abtriebsvorrichtung 9 abgibt.

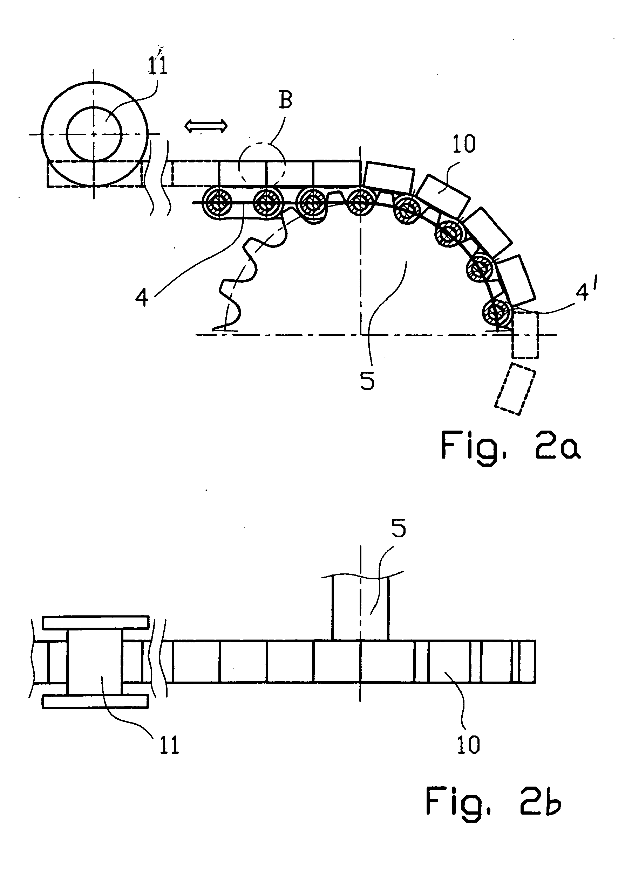

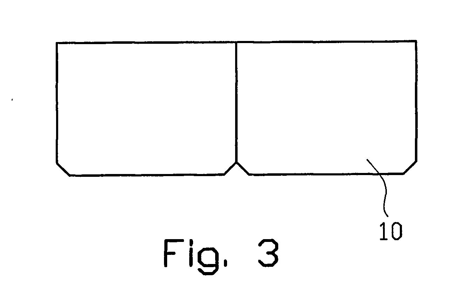

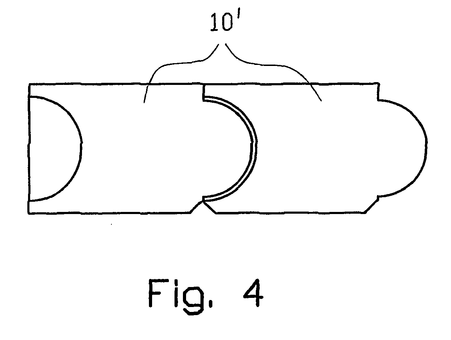

Um die Betätigungskraft tatsächlich übertragen zu können, sind die Glieder 4' des Kettentriebes 4 gemäß Fig. 2 auf der dem Umlenkrad abgekehrten Seite mit Stützblöcken 10 versehen, die von zumindest einer Druckrolle 11 mit seitlicher Führung beaufschlagt werden, damit die Kettenglieder nicht auswandern. Wie Fig. 4 zeigt, können benachbarte Stützblöcke 10' formschlüssig ineinandergreifen, nach Art eines Kugeldornes und einer Kugelpfanne, oder gemäß Fig. 3 mit ebenen Stoßflächen aneinanderstoßen. Bei der in Fig. 4 gezeigten Ausführungsform sind die Druckrollen überflüssig.

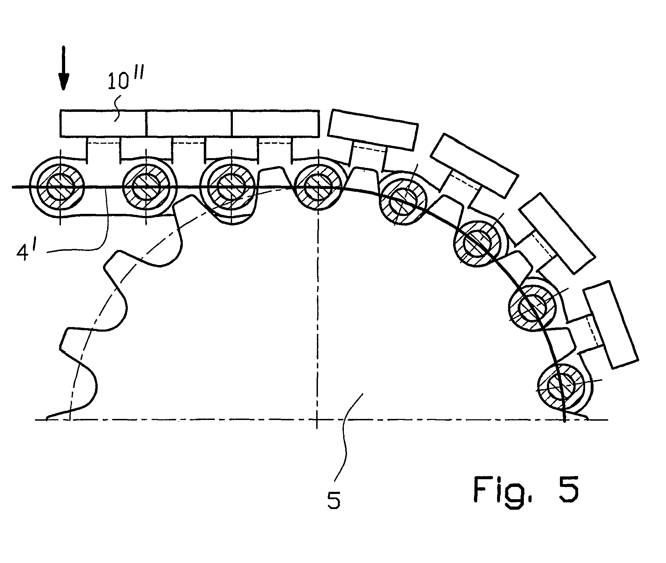

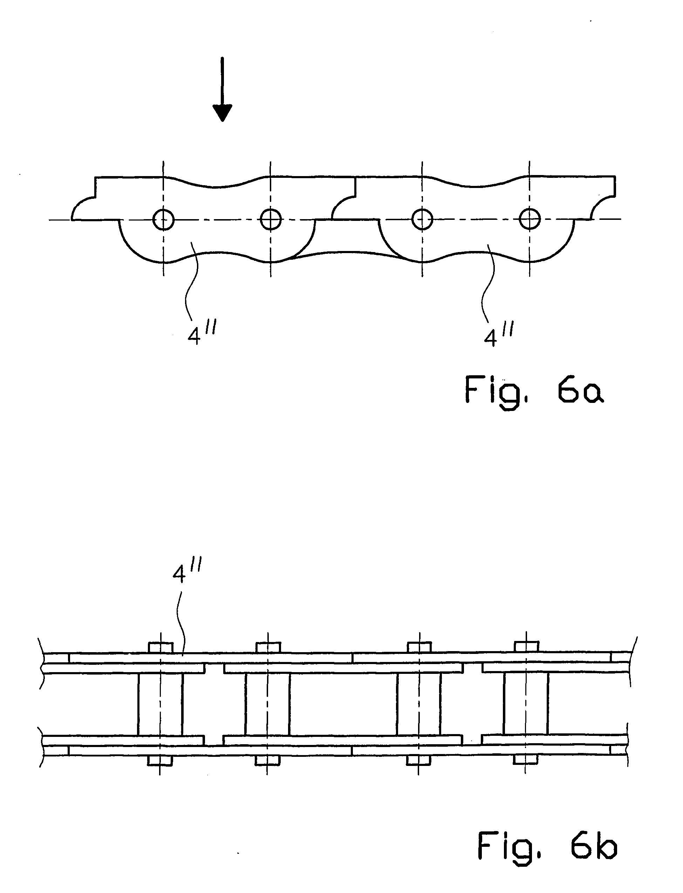

Fig. 5 zeigt eine Alternative, bei der die Kettenglieder 4' Stützblöcke 10" tragen, die Abstand vom Kettenglied haben, und die Fig. 6a-b eine andere Kettengliedausbildung, bei welcher die Abstützfunktion in die Kettenglieder integriert ist.

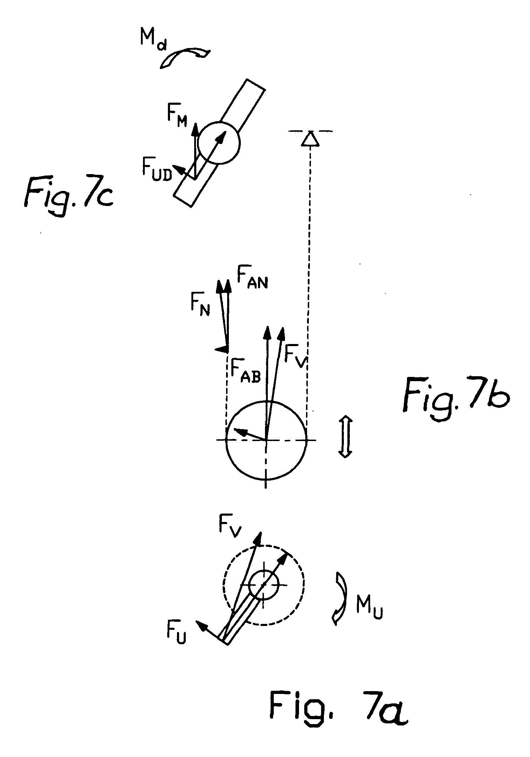

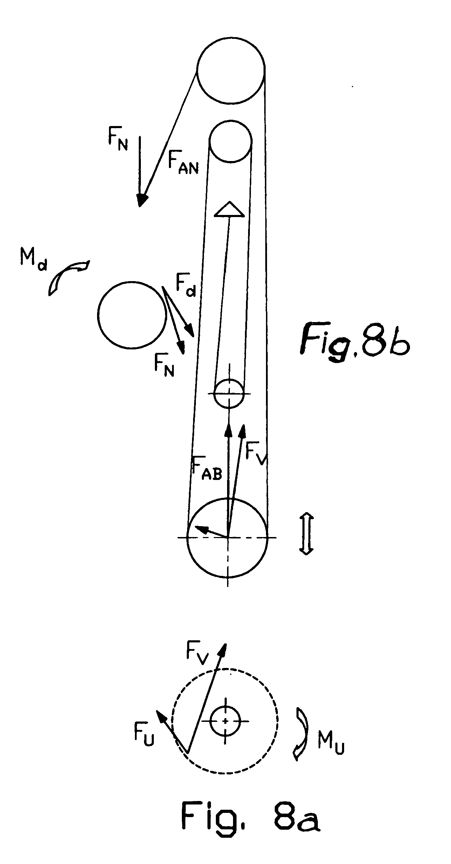

Die Fig. 7a-7c zeigen den Kraft- und Drehmomentverlauf eines Vorgeleges mit einem Kettenrad und die Fig. 8a, 8b den Verlauf für ein Vorgelege mit vier Kettenrädern.

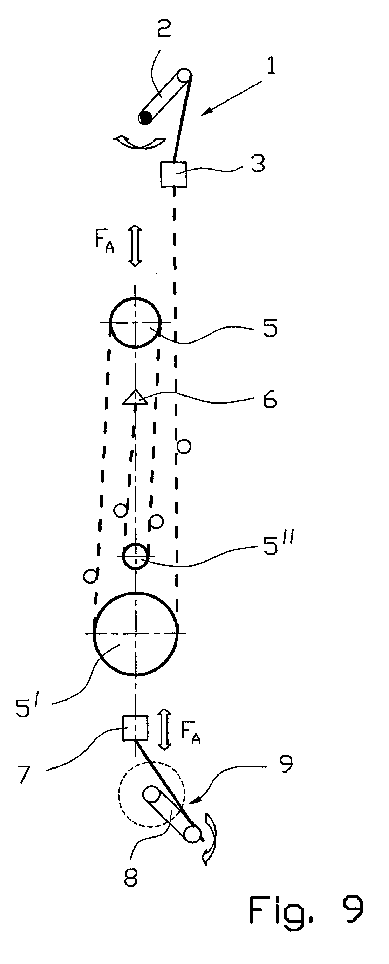

Fig. 9 illustriert die Anwendung der Erfindung mit einer zentrischen Anordnung der Umlenkräder und Schiebekulissen.

Es versteht sich, daß die beschriebenen Ausführungsbeispiele im Rahmen des allgemeinen Erfindungsgedankens verschiedentlich abgewandelt werden können, insbesondere was den Detailaufbau der Kettenglieder und deren Stützelemente sowie die Führung des Kettentriebes betrifft.

Im Falle eines einzigen Ketten-Umlenkrades 4 ist die für den Antrieb einer mit der Abtriebseite verbundenen Vorrichtung erforderliche Kraft halb so groß wie bei einem Direktantrieb, d.h. es kann mit einer geringeren Betätigungsleistung gearbeitet werden bzw. bei geringer Drehzahl der Betätigungsvorrichtung die gleiche Abtriebswirkung erzielt werden, was z.B. bei Windkraftwerken und deren Stromgeneratoren vorteilhaft ist.

## Patentansprüche

1. Vorgelegeantrieb, insbesondere für Windkraftwerke, der zwischen einer Betätigungsvorrichtung und einer angetriebenen Vorrichtung zwischengeschaltet ist, wobei er mit einem Kettentrieb (4) ausgestattet ist, der nach dem Flaschenzugprinzip arbeitet und die Drehbewegung der Betätigungsvorrichtung (1) über ein Pleuel (2) und ein von diesem translatorisch bewegtes Schiebeglied (3) aufnimmt, das mit dem einen Ende des Kettentriebes (4) verbunden ist, der über zumindest eine Umlenkrolle (5) zu einem ortsfesten Anker (6) und auf seiner der Umlenkrolle abgewandten Seite biegesteif geführt ist, wobei die Umlenkrolle ihrerseits mit einer translatorisch geführten Kulisse (7) verbunden ist, welche mit der angetriebenen Vorrichtung (9) gekuppelt ist.

2. Vorgelegeantrieb nach Anspruch 1, **dadurch gekennzeichnet, daß** die Kettenglieder (4) an ihrer der Umlenkrolle abgekehrten Seite mit Stützelementen (10) versehen sind, die kraftschlüssig aneinander angreifen, wobei eine ortsfeste Führungseinrichtung (11) an der Außenseite der Stützelemente (10) angreift.

3. Vorgelegeantrieb nach Anspruch 1, **dadurch gekennzeichnet, daß** die Kettenglieder (4) auf ihrer der Umlenkrolle (5) abgekehrten Seite mit Stützelementen (10') versehen sind, die aneinander form- und kraftschlüssig angreifen.

4. Vorgelegeantrieb nach Anspruch 3, **dadurch gekennzeichnet, daß** die blockförmig ausgebildeten Stützelemente (10') an ihren Stirnseiten nach Art eines Kugeldornes und einer Kugelpfanne ausgebildet sind.

5. Vorgelegeantrieb nach Anspruch 1, **dadurch gekennzeichnet, daß** die Stützelemente in die Kettenglieder (4") integriert sind

## Claims

1. Countershaft drive, in particular for wind power stations, which drive is connected in series between an actuation device and a driven device, wherein it is fitted with a chain drive (4) which operates in accordance with the block and tackle principle and receives the rotational movement of the actuation device (1) via a connecting rod (2) and a sliding member (3) moved in a translatory manner by said connecting rod and connected to one end of the chain drive (4), which is guided in a rigid manner over at least one return roller (5) towards a fixed anchor (6) on its side remote from the return roller, the return roller in turn being connected to a crank (7) guided in a translatory manner which is coupled to the driven device (9).

2. Countershaft drive according to claim 1, **characterised in that** the chain members (4) are provided with assisting elements (10) on their side remote from the return roller, which elements engage with one another non-positively, a fixed guide means (11) engaging with the outer face of the assisting elements (10).

3. Countershaft drive according to claim 1, **characterised in that** the chain members (4) are provided with assisting elements (10') on their side remote from the return roller (5), which elements engage with one another positively and non-positively.

4. Countershaft drive according to claim 3, **characterised in that** the end faces of the block-shaped assisting elements (10') are configured as an annular segment-shaped projection and an annular segment-shaped recess.

5. Countershaft drive according to claim 1, **characterised in that** the assisting elements are integrated into the chain members (4").

## Revendications

1. Transmission intermédiaire, en particulier pour centrale éolienne, interposée entre un dispositif d'actionnement et un dispositif entraîné, ladite transmission étant équipée d'une transmission à chaîne (4) qui fonctionne suivant le principe du palan et qui reçoit le mouvement de rotation du dispositif d'actionnement (1) via une bielle (2) et via un organe coulissant (3) déplacé en translation par celle-ci, ledit organe étant relié à une extrémité de la transmission à chaîne (4), celle-ci étant guidée via au moins une roue de renvoi (5) vers un ancrage stationnaire (6) et de manière rigide vis-à-vis de la flexion sur son côté détourné de la roue de renvoi, ladite roue de renvoi étant à son tour reliée à un coulisseau (7) guidé en translation, qui est accouplé au dispositif entraîné (9).

2. Transmission intermédiaire selon la revendication 1, **caractérisé en ce que**, de leur côté détourné de la roue de renvoi, les maillons de chaîne (4) sont pourvus d'éléments de soutien (10) qui s'engagent les uns contre les autres à coopération de forces, et un moyen de guidage stationnaire (11) engage la face extérieure des éléments de soutien (10).

3. Transmission intermédiaire selon la revendication 1, **caractérisé en ce que**, de leur côté détourné de la roue de renvoi (5), les maillons de chaîne (4) sont pourvus d'éléments de soutien (10') qui s'engagent les uns contre les autres à coopération de formes et à coopération de forces.

4. Transmission intermédiaire selon la revendication 3, **caractérisé en ce que** les éléments de soutien (10'), réalisés sous forme de blocs, sont réalisés au niveau de leur face frontale à la manière d'une projection sphérique et d'une calotte sphérique.

5. Transmission intermédiaire selon la revendication 1, **caractérisé en ce que** les éléments de soutien sont intégrés dans les maillons de chaîne (4").
